# EUROPÄISCHE PATENTSCHRIFT

(11) **EP 2 208 921 B1**
(45) Veröffentlichungstag und Bekanntmachung des Hinweises auf die Patenterteilung: **21.03.2012**
(21) Anmeldenummer: 10450002.0
(22) Anmeldetag: 18.01.2010
(51) Int. Cl.: F17C 13/12, F23B 99/00

(54) **Über-/Unterdrucksicherungsvorrichtung**
Excess/negative pressure prevention device
Dispositif de protection contre la surpression/sous-pression

(30) Priorität: 20.01.2009 AT 882009
(43) Veröffentlichungstag der Anmeldung: 21.07.2010
(73) Patentinhaber: Sattler AG, 8041 Graz (AT)
(72) Erfinder: Enzenhofer, Erwin, 8160 Weiz (AT); Wunderer, Alexander, 7423 Wiesfleck (AT)
(74) Vertreter: Ellmeyer, Wolfgang

(56) Entgegenhaltungen:
- EP-A2- 0 333 698
- DE-C- 617 361
- DE-U1-202004 001 658
- JP-A- 2003 207 103

## Beschreibung

Die Erfindung betrifft eine Über-/Unterdrucksicherungsvorrichtung zur Sicherung von Behältern im Niederdruckgasbereich mit einem Gasanschluss, einem Lufteinlass und/oder einem Ausblasauslass und zumindest einer Druckbetätigungsvorrichtung, welche bei Unterschreiten eines voreinstellbaren Niedrigdruck-Wertes den Gasanschluss mit dem Lufteinlass verbindet und/oder bei Überschreiten eines voreinstellbaren Hochdruck-Werts den Gasanschluss mit dem Ausblasauslass verbindet, wobei die zumindest eine Druckbetätigungsvorrichtung eine Betätigungs-Kammer mit einer Verschlussöffnung und einem Druckdeckel umfasst, wobei der Druckdeckel durch Druckeinwirkung zwischen einer Ruhestellung, in welcher der Druckdeckel die Verschlussöffnung zumindest teilweise verschließt, und einer Abblasstellung, in welcher der Druckdeckel von der Verschlussöffnung abgehoben ist und diese freigibt, bewegbar ist, und wobei die Betätigungs-Kammer mit einer Dichtflüssigkeit teilweise befüllbar ist, in welche der Druckdeckel - bei Verwendung - in der Ruhestellung zumindest bereichsweise eintaucht.

Derartige Über-/Unterdrucksicherungsvorrichtungen (siehe z.B. JP 20030103) werden beispietsweise bei Biogasspeichern oder Fermentern eingesetzt, da diese üblicherweise eine Abdeck-Membran in Form einer Folie aufweisen, die bei Überdruck, typischerweise im mBar-Bereich, oder aber auch bei Unterdruck über die Reißfestigkeit belastet werden könnte und dadurch ein beträchtlicher Schaden entstehen würde sowie lange Standzeiten die Folge wären. Sobald der Druck innerhalb des Gasspeichers, z.B. durch eine erhöhte Gasproduktion, über einen ersten bestimmten Wert ansteigt oder unter einen zweiten bestimmten Wert abfällt, z.B. durch eine zu geringe Gasproduktion, spricht die Über-/Unterdrucksicherungsvorrichtung an und lässt entweder das überschüssige Gas über ein Abblasrohr entweichen oder gleicht im Unterdruckfall den Unterdruck durch die Herstellung einer Verbindung mit der Umgebung aus.

Der Anwendungsbereich der Erfindung ist aber nicht auf die vorgenannten Beispiele beschränkt und erstreckt sich auf jegliche Art von Behältern. Üblicherweise wird sowohl eine Überdrucksicherungsvorrichtung als auch eine Unterdrucksicherungsvorrichtung vorgesehen sein, es kann aber in bestimmten Fällen nur eine Überdrucksicherungsvorrichtung oder nur eine Unterdrucksicherungsvorrichtung ausgebildet sein. Der Schutzbereich der Erfindung umfasst alle diese genannten Anwendungsfälle.

Unter Betriebsdruck wird der bei Normaldruck vorherrschende Druck im Gasspeicher-System verstanden. Dieser ergibt sich etwa bei einem Doppelmembran-Gasspeicher durch den Luftdruck, der zwischen der inneren und der äußeren Membran mittels Gebläse und Druckregelklappe aufrechterhalten wird, und den durch das Eigengewicht der inneren Membran ausgeübten Druck. Der durch das Gebläse erzeugte Luftvolumenstrom wird so geregelt, dass sich der gewünschte Betriebsdruck innerhalb der inneren Membran einstellt.

Ein wesentliches Qualitätsmerkmal bei Über-/Unterdrucksicherungsvorrichtungen ist der Druckanstiegsverlauf im Bereich vom Ansprechdruck bis zum Abblasedruck.

Der Ansprech-(Über- oder Unter)Druck ist dabei der Auslösepunkt der Über-/Unterdrucksicherungsvorrichtung, ab welchem im Überdruckfall Gas aus dem zu sichernden Gasspeicherbehälter ins Freie entweichen gelassen und im Unterdruckfall das Einsaugen von Luft veranlasst wird.

Bei Erreichen des Abblasedrucks herrscht der maximal mögliche Druck im Gasspeicherssystem bei maximalem Gasvolumenstrom durch die Über-/Unterdrucksicherungsvorrichtung.

Aufgabe der Erfindung ist es daher, eine Über-/Unterdrucksicherungsvorrichtung der eingangs genannten Art anzugeben, bei der ein hoher Gasvolumenstrom sowohl im Unterdruckbereich eingelassen, als auch im Überdruckbereich abgelassen werden kann, und der Druckanstieg über den Ansprechdruck hinaus so gering wie möglich gehalten werden kann.

Erfindungsgemäß wird dies dadurch erreicht, dass der Druckdeckel glockenförmig ausgebildet ist und - in Gebrauchsposition - an seiner Unterseite eine Glockenöffnung aufweist, deren Rand nach außen gekrümmt ist, um eine Strömungs-Abrisskante auszubilden.

Die Strömungs-Abrisskante an der Glockenöffnung bewirkt eine Herabsetzung des Strömungswiderstandes im Druckdeckel, wodurch bereits bei geringem Druckanstieg hohe Volumenströme erzielt werden können.

Weiters kann das Ziel der Erfindung bei einer eingangs genannten Über-/Unterdrucksicherungsvorrichtung dadurch gelöst werden, dass der Druckdeckel an seiner Oberseite eine torus-artige Auswölbung aufweist, um an der Innenseite einen Strömungsumlenkbereich auszubilden, der - im Querschnitt gesehen - im Wesentlichen einen kreissegmentförmigen Radial-Verlauf aufweist.

Die erfindungsgemäße torus-artige Auswölbung des Druckdeckels kann unabhängig von aber auch in Kombination mit der weiter oben definierten erfindungsgemäßen glockenförmigen Ausbildung des Druckdeckels mit Strömungs-Abrisskante ausgebildet sein.

Aufgrund der torus-artigen Auswölbung an der Oberseite des Druckdeckels wird die hindurchgeleitete Gasströmung strömungstechnisch günstig entlang einer Kreissegmentlinie von unten kommend nach unten umgelenkt, wodurch ebenfalls bei geringem Druckanstieg hohe Volumenströme durch die Über-/Unterdrucksicherungsvorrichtung geleitet werden können.

Ein schnell ansteigender Volumenstrom kann noch besser bewältigt werden, wenn gemäß einer Weiterbildung der Erfindung vorgesehen ist, dass der Druckdeckel rotationssymmetrisch ausgebildet ist und entlang seiner Symmetrieachse ein Führungsstab vorgesehen ist, der so gelagert ist, dass er die Bewegung des Druckdeckels zwischen der Ruhestellung und der Abblasstellung entlang der Symmetrieachse ermöglicht.

Des weiteren kann eine Positionsdetektionsvorrichtung vorgesehen sein, welche die Position des Führungsstabes detektiert, um damit eine aussagekräftige Anzeige des Betriebszustandes der erfindungsgemäßen Über-/Unterdrucksicherungsvorrichtung zu schaffen.

Eine weitere Möglichkeit, den jeweiligen Betriebszustand der erfindungsgemäßen Über-/Unterdrucksicherungsvorrichtung zu erfassen, kann sein, eine Druckmessvorrichtung vorzusehen, welche den Druck im Ausblasauslass und/oder im Lufteinlass misst.

Um eine Einstellmöglichkeit für den Ansprechdruck der erfindungsgemäßen Über-/Unterdrucksicherungsvorrichtung zu schaffen, kann der Druckdeckel an seiner Oberseite eine Gewichtsbelastungs-Kammer aufweisen, die zur Einstellung des Ansprechdruckes mit Gewichtseinheiten wahlweise befüllbar ist.

Um trotz der erfindungsgemäß ausgebildeten torus-artigen Auswölbung des Druckdeckels eine zuverlässige Abdeckung der Verschlussöffnung zu ermöglichen, kann weiters vorgesehen sein, dass der glockenförmige Druckdeckel an seiner Oberseite eine mittige, vertieft angeordnete Fläche aufweist, die parallel zur Glockenöffnung orientiert ist und welche in der Ruhestellung des Druckdeckels die Verschlussöffnung teilweise abdeckt.

In weiterer Ausbildung der Erfindung kann der glockenförmige Druckdeckel einen hohlzylindrischen Abschnitt aufweisen, um den Übergangsbereich zwischen der torus-artigen Auswölbung und dem Rand des Druckdeckels strömungstechnisch günstig auszubilden.

Ein weiteres Ausführungsbeispiel der Erfindung kann darin bestehen, dass die Verschlussöffnung am freien Ende eines Rohrstutzens ausgebildet ist, dessen Außendurchmesser kleiner als die Innenweite des glockenförmigen Druckdeckels ist, und der in die Betätigungs-Kammer und in den dort angeordneten glockenförmigen Druckdeckel ragt, sodass zwischen Rohrstutzen und Druckdeckel ein ringförmiger Zwischenraum definiert ist, in den die bei Verwendung in der Betätigungs-Kammer eingefüllte Dichtflüssigkeit eintreten kann. Durch das Vorstehen des Rohrstutzens aus dem Bodenbereich der Betätigungs-Kammer in den Druckdeckel wird die in die Betätigungs-Kammer eingefüllte Dichtflüssigkeit durch den Druckdeckel in seiner Ruhestellung so unterteilt, dass sich in den zwei dabei abgegrenzten Ringräumen zwei unterschiedliche Flüssigkeitsniveaus einstellen können, die miteinander kommunizieren. Bei Druckanstieg wird das eine Niveau angehoben und das andere abgesenkt. Sobald eine Niveauabsenkung bis zur Unterkante erfolgt, beginnt sich eine Gasströmung durch den Druckdeckel und die Verschlussöffnung auszubilden, welche bei weiterem Druckanstieg zu einem Anheben des Druckdeckels in die Abblasstellung führt.

Um den Strömungswiderstand weiter zu verringern, kann in Weiterbildung der Erfindung der glockenförmige Druckdeckel im Bereich des freien Ende des Rohrstutzens durch die torus-artige Auswölbung so gekrümmt und so vom Rohrstutzen beabstandet sein, dass ein in den ringförmigen Zwischenraum mündender Gas- bzw. Luftumlenkungsbereich ausgebildet ist.

Eine Kombination aus einer Überdruck- und einer Unterdrucksicherungsvorrichtung kann dadurch erreicht werden, dass die zumindest eine Druckbetätigungsvorrichtung durch eine erste Druckbetätigungsvorrichtung zur Sicherung gegen Unterdruck und eine zweite Druckbetätigungsvorrichtung zur Sicherung gegen Überdruck gebildet ist.

Eine vorteilhafte Ausführungsform dieser Kombination aus Über- und Unterdrucksicherungsvorrichtung kann darin bestehen, dass die Betätigungs-Kammer der ersten Druckbetätigungsvorrichtung - in Gebrauchsstellung - unterhalb der zweiten Druckbetätigungsvorrichtung angeordnet ist. Dies ermöglicht einen relativ einfach herstellbaren Aufbau der erfindungsgemäßen Über-/Unterdrucksicherungsvorrichtung.

Bei der vorgenannten Anordnung kann weiters vorgesehen sein, dass der Rohrstutzen der zweiten Druckbetätigungsvorrichtung mit der ersten Druckbetätigungsvorrichtung in Verbindung steht, und der Ausblasauslass mit der zweiten Druckbetätigungsvorrichtung verbunden ist.

Schließlich kann der Lufteinlass mit dem Rohrstutzen der ersten Druckbetätigungsvorrichtung und der Gasanschluss mit der ersten Druckbetätigungsvorrichtung verbunden sein.

Der Aufbau einer erfindungsgemäßen Über-/Unterdrucksicherungsvorrichtung kann in vorteilhafter Weise dadurch vereinfacht werden, dass die Betätigungs-Kammer der ersten und der zweiten Druckbetätigungsvorrichtung jeweils hohlzylindrisch ausgebildet ist und Verbindungsflansche an beiden Enden der Betätigungs-Kammern vorgesehen sind.

Um bei tiefen Temperaturen ein Einfrieren der Dichtflüssigkeit und damit eine Betriebsstörung der erfindungsgemäßen Überdruck-/Unterdrucksicherungsvorrichtung zu verhindern, kann gemäß einem weiteren Ausführungsbeispiel der Erfindung vorgesehen sein, dass sie von einer Wärmeisolierung umgeben ist und/oder eine Heizvorrichtung vorgesehen ist.

Weiteres Ziel der Erfindung ist die Bereitstellung einer Überdruck-/Unterdrucksicherungsvorrichtung der eingangs genannten Art, welche eine aussagekräftige Anzeige ihres Betriebszustandes ermöglicht.

Außerhalb der zumindest einen Druckbetätigungsvorrichtung kann eine Anzeigevorrichtung zur Anzeige des Flüssigkeitsstandes der Dichtflüssigkeit sowohl innerhalb als auch außerhalb des Druckdeckels vorgesehen sein.

Durch die Anzeige beider Flüssigkeitsstände - innerhalb und außerhalb des Druckdeckels - kann eine Aussage über die vorherrschenden Druckzustände in der jeweiligen Betätigungskammer getroffen werden, also wie weit das eine Flüssigkeitsniveau abgesenkt und das damit in Verbindung stehende andere Flüssigkeitsniveau angehoben ist. Der mittlere Wert zwischen dem einen und dem anderen Wert ergibt wiederum den Füllstand der Vorrichtung, aus dem ersichtlich ist, ob ausreichend Dichtflüssigkeit vorhanden ist.

Eine bevorzugte Ausführungsform der Erfindung kann darin bestehen, dass die Anzeige des innerhalb und des außerhalb des Druckdeckels vorliegenden Flüssigkeitsstandes in Form von zwei nebeneinander angeordneten, linearen Pegelanzeigeinstrumenten gebildet ist, die parallel verlaufende Skalenbereiche aufweisen.

Damit sind beide Flüssigkeitsstände nebeneinander ablesbar und es ist der dazwischen liegende Mittelwert für den Ruhe-Füllstandswert auf einen Blick ersichtlich.

Eine ohne großen Aufwand realisierbare Ausführungsform der erfindungsgemäßen Anzeige kann darin bestehen, dass die linearen Pegelanzeigeinstrumente durch zwei parallel angeordnete, durchsichtige Röhrchen gebildet sind, die an ihren Enden über flüssigkeitsdichte und/oder gasdichte Leitungen mit dem Bereich innerhalb des Druckdeckels, außerhalb des Druckdeckels oder mit der Atmosphäre verbunden sind.

Auf diese Weise kann der im Inneren der jeweiligen Betätigungskammer sonst nicht ersichtliche Pegelstand der Dichtflüssigkeit außen angezeigt werden, indem über die Röhrchen außerhalb der Betätigungskammer kommunizierende Gefäße vorhanden sind, deren Füllstand mit freiem Auge abgelesen werden kann. Die Leitungen, welche die Verbindung zwischen dem Innenraum der Betätigungskammer und den Röhrchen herstellen, können direkt durch die Wand der Betätigungskammer geführt werden.

Nachstehend wird die Erfindung anhand der in den Zeichnungen dargestellten Ausführungsformen eingehend erläutert. Es zeigt dabei
Fig.1 eine Seitenansicht einer Ausführungsform der erfindungsgemäßen Über-/Unterdrucksicherungsvorrichtung;
Fig.2 ein Detail der Vorrichtung gemäß Fig.1
Fig.3 bis Fig.7 in schematischer Darstellung unterschiedliche Betriebszustände der erfindungsgemäßen Vorrichtung;
Fig.8 eine schematische Darstellung einer weiteren Ausführungsform der erfindungsgemäßen Über-/Unterdrucksicherungsvorrichtung;
Fig.9 und 10 jeweils eine Draufsicht auf eine weitere Ausführungsform der erfindungsgemäßen Über-/Unterdrucksicherungsvorrichtung für den Überdruck-Zustand und den Unterdruckzustand und
Fig.11 eine Volumenstrom-Druckdifferenzkennlinie für die erfindungsgemäße Über-/Unterdrucksicherungsvorrichtung und für solche aus dem Stand der Technik bekannte Vorrichtungen.

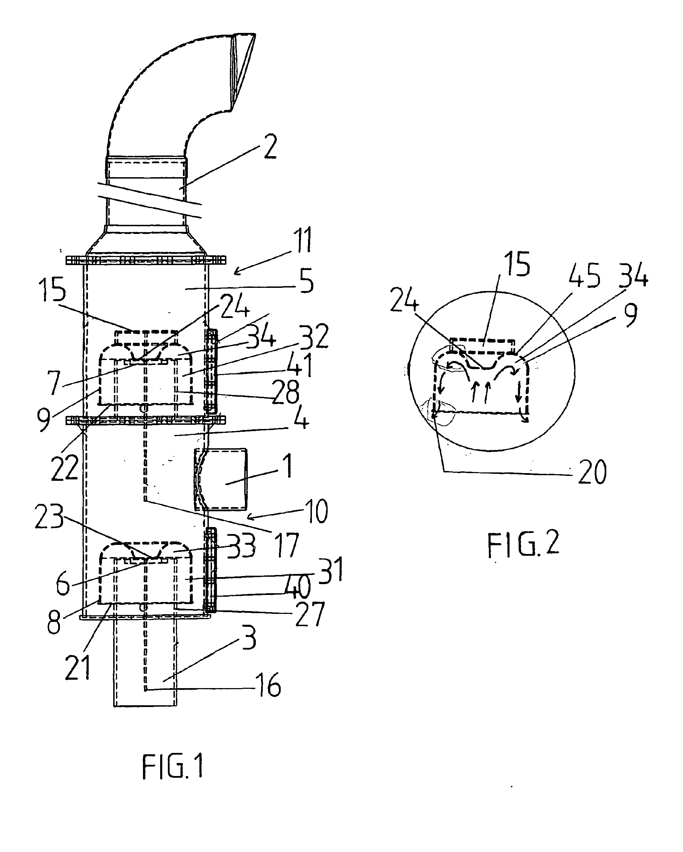

Fig.1 zeigt eine Über-/Unterdrucksicherungsvorrichtung zur Sicherung eines nicht dargestellten Behälters im Niederdruckgasbereich, z.B. eines Biogasspeichers. Ein Gasanschluss 1 ist bei Verwendung mit einem Auslassrohr des zu sichernden Behälters verbunden. Somit steht am Gasanschluss 1 im Betriebsfall der im zu sichernden Behälter vorhandene Gasdruck an. Fig.1 zeigt jedoch den drucklosen Zustand der Über-/Unterdrucksicherungsvorrichtung ohne Befüllung mit einer Dicht-oder Trennflüssigkeit.

Fig.1 zeigt insbesondere eine Kombination aus einer Unterdrucksicherungsvorrichtung und einer Überdrucksicherungsvorrichtung. Im Wesentlichen können aber auch nur die Unterdrucksicherungsvorrichtung oder nur die Überdrucksicherungsvorrichtung ausgebildet sein.

Es ist eine erste Druckbetätigungsvorrichtung 10 zur Sicherung gegen Unterdruck und eine zweite Druckbetätigungsvorrichtung 11 zur Sicherung gegen Überdruck vorgesehen.

Die erste Druckbetätigungsvorrichtung 10 weist eine Betätigungs-Kammer 4 auf, die in Gebrauchsstellung unterhalb der zweiten Druckbetätigungsvorrichtung 11 angeordnet ist.

Der Gasanschluss 1 ist mit der ersten Druckbetätigungsvorrichtung 10 verbunden bzw. mündet der Gasanschluss 1 in diese. Weiters ist im unteren Bereich der ersten Druckbetätigungsvorrichtung 10 ein Lufteinlass 3 in Form eines Rohrstutzens 27 ausgebildet, der mit der umgebenden Atmosphäre in Verbindung steht und über den im Unterdruckfall Luft in die erste Druckbetätigungsvorrichtung 10 eingesaugt wird, um den Unterdruck auszugleichen. Dazu verbindet die erste Druckbetätigungsvorrichtung 10 bei Unterschreiten eines voreinstellbaren Niedrigdruck-Wertes den Gasanschluss 1 mit dem Lufteinlass 3.

Die oberhalb der ersten Druckbetätigungsvorrichtung 10 angeordnete zweite Druckbetätigungsvorrichtung 11 ist durch eine Betätigungs-Kammer 5 gebildet, die an ihrer Oberseite einen Ausblasauslass 2 aufweist, der mit der zweiten Druckbetätigungsvorrichtung 11 in Verbindung steht. Über den Ausblasauslass 2 wird im Überdruckfall Gas an die Atmosphäre abgegeben. An ihrer Unterseite steht die zweite Druckbetätigungsvorrichtung 11 über einen Rohrstutzen 28 mit der ersten Druckbetätigungsvorrichtung 10 in Verbindung.

Bei Überschreiten eines voreinstellbaren Hochdruck-Werts verbindet die zweite Druckbetätigungsvorrichtung 11 den Gasanschluss 1 über den Rohrstutzen 28 mit dem Ausblasauslass 2, wodurch der innerhalb des zu sichernden Behälters sich aufbauende Überdruck ausgeglichen wird.

Das Ausgleichen des Unterdrucks bzw. des Überdrucks geschieht über Verschlussöffnungen 6, 7 die in den Betätigungs-Kammern 4, 5 der ersten und zweiten Druckbetätigungsvorrichtung 10, 11 ausgebildet sind und im drucklosen Zustand jeweils von einem Druckdeckel 8, 9 zumindest teilweise verschlossen sind.

Die Verschlussöffnung 6 ist am freien Ende des Rohrstutzens 27 der ersten Druckbetätigungsvorrichtung 10 und die Verschlussöffnung 7 am freien Ende des Rohrstutzens 28 der zweiten Druckbetätigungsvorrichtung 11 ausgebildet.

Sowohl der Druckdeckel 8 der ersten Betätigungsvorrichtung 10 als auch der Druckdeckel 9 der zweiten Betätigungsvorrichtung 11 ist durch Druckeinwirkung zwischen einer Ruhestellung, in welcher der Druckdeckel 8, 9 die Verschlussöffnung 6, 7 zumindest teilweise verschließt, und einer Abblasstellung, in welcher der Druckdeckel 8, 9 von der Verschlussöffnung 6, 7 abgehoben ist und diese freigibt, bewegbar.

Die Betätigungs-Kammern 4, 5 der ersten und der zweiten Betätigungsvorrichtung 10, 11 sind mit einer Dichtflüssigkeit teilweise befüllbar, in welche die Druckdeckel 8, 9 - bei Verwendung - in der Ruhestellung zumindest bereichsweise eintauchen.

In dem in Fig.1 und 2 gezeigten Ausführungsbeispiel sind die Betätigungs-Kammern 4, 5 der ersten und der zweiten Druckbetätigungsvorrichtung 10, 11 jeweils hohlzylindrisch ausgebildet und es sind Verbindungsflansche an beiden Enden der Betätigungs-Kammern 4, 5 vorgesehen.

Erfindungsgemäß sind die Druckdeckel 8, 9 glockenförmig ausgebildet und sie weisen - in Gebrauchsposition - an ihrer Unterseite eine Glockenöffnung 21, 22 auf, deren Rand nach außen gekrümmt ist, um eine Strömungs-Abrisskante 20 auszubilden, welche einen geringeren Strömungswiderstand für das durch den jeweiligen Druckdeckel 8, 9 strömende Gas ermöglicht.

Weiters ist erfindungsgemäß vorgesehen, dass der Druckdeckel 8, 9 an seiner Oberseite eine torus-artige Auswölbung 45 aufweist, um an der Innenseite einen Strömungsumlenkbereich auszubilden, der - im Querschnitt gesehen - im Wesentlichen einen kreissegmentförmigen Radial-Verlauf aufweist, der in Fig. 1 und 2 im Querschnitt zu ersehen ist. Die in Fig. 2 eingezeichneten Pfeile deuten an, wie die von unten aus der ersten Druckbetätigungsvorrichtung 10 kommende Gasströmung in der torus-artigen Auswölbung 45 nach unten umgelenkt wird, um schließlich über die Strömungs-Abrisskante 20 geleitet zu werden. Diese Umlenkung geschieht entlang des gesamten Umfanges des Druckdeckels 9.

Anschließend an die torus-artige Auswölbung 45, welche den Druckdeckeln 8, 9 das Aussehen einer Backform verleiht, weist der glockenförmige Druckdeckel 8, 9 einen hohlzylindrischen Abschnitt auf, der in die Strömungs-Abrisskante 20 übergeht.

Wie in Fig.1 und 2 dargestellt weisen beide glockenförmigen Druckdeckel 8, 9 an ihrer Oberseite mittige, vertieft angeordnete Flächen 23, 24 auf, die parallel zur Glockenöffnung 21, 22 orientiert sind und welche in der Ruhestellung der Druckdeckel 8,9 die Verschlussöffnungen 6, 7 teilweise abdecken.

Die beiden Druckdeckel 8, 9 sind rotationssymmetrisch ausgebildet und entlang ihrer Symmetrieachse ist jeweils ein Führungsstab 16, 17 vorgesehen, der so gelagert ist, dass er die Bewegung des jeweiligen Druckdeckels 8,9 zwischen der Ruhestellung und der Abblasstellung entlang der Symmetrieachse ermöglicht.

Um die Stellung der Druckdeckel 8, 9 innerhalb der Druckbetätigungsvorrichtungen 10, 11 anzuzeigen, ist eine nicht dargestellte Positionsdetektionsvorrichtung vorgesehen, welche die Position der Führungsstäbe 16, 17 detektiert. Weiters ist eine ebenfalls nicht dargestellte Druckmessvorrichtung vorgesehen, welche den Druck im Ausblasauslass 2 und/oder im Lufteinlass 3 misst.

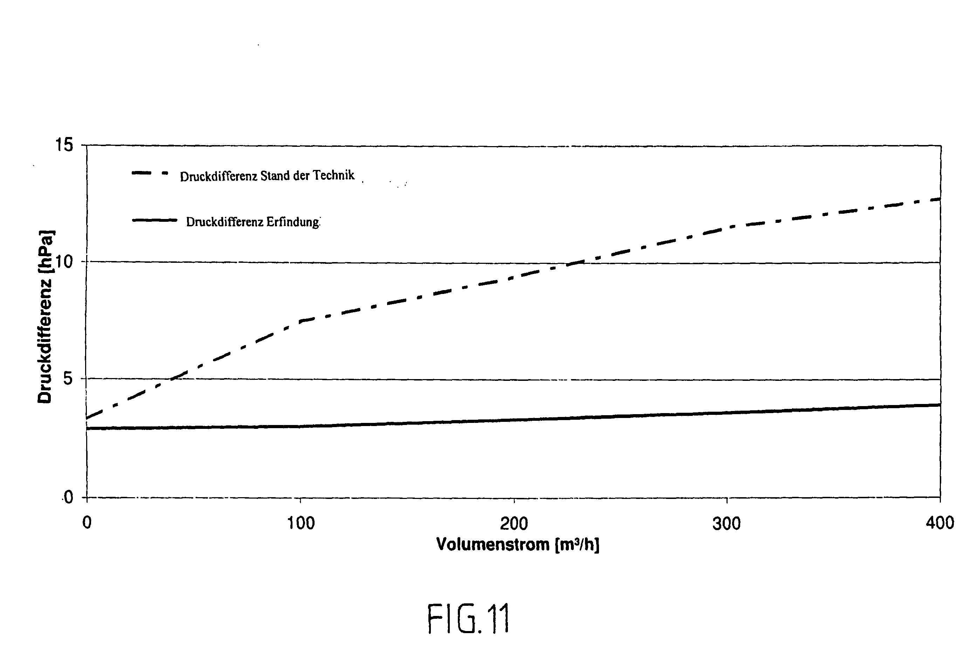

Der Druckdeckel 9 ist an seiner Oberseite mit einer Gewichtsbelastungs-Kammer 15 (Fig.1 und 2), z.B. in Form einer verschließbaren Kammer ausgestattet, die zur Einstellung des Ansprechdruckes mit Gewichtseinheiten wahlweise befüllbar ist. Als Gewichtseinheiten können Stahllinsen verwendet werden, um eine feinstufige Einstellung zu gewährleisten. Fig.11 zeigt die Volumenstrom-Druckdifferenz-Charakteristik für die erfindungsgemäße Über-/Unterdrucksicherungsvorrichtung (vollausgezogene Linie) im Vergleich zu jener für eine aus dem Stand der Technik bekannte Über-/Unterdrucksicherungsvorrichtung (strichpunktierte Linie). Wie aus Fig.11 ersichtlich zeichnet sich die strömungstechnisch optimierte Über-/Unterdrucksicherungsvorrichtung gemäß der Erfindung durch eine sehr flach verlaufende Volumenstrom-Druckdifferenz-Kurve aus.

Der Außendurchmesser der die Verschlussöffnungen 6, 7 an ihrem freien Ende ausbildenden Rohrstutzen 27, 28 ist kleiner als die Innenweite des diese jeweils teilweise umgebenden glockenförmigen Druckdeckels 8, 9, wobei die Rohrstutzen 27, 28 in die Betätigungs-Kammer 4, 5 und in den dort angeordneten glockenförmigen Druckdeckel 8, 9 ragen, sodass zwischen dem Rohrstutzen 27, 28 und dem zugehörigen Druckdeckel 8, 9 ein ringförmiger Zwischenraum 31, 32 definiert ist, in den die bei Verwendung in der Betätigungs-Kammer 4, 5 eingefüllte Dichtflüssigkeit eintreten kann.

Der glockenförmige Druckdeckel 8, 9 ist im Bereich des freien Ende des Rohrstutzens 27, 28 durch die torus-artige Auswölbung 45 so gekrümmt und so vom Rohrstutzen 27, 28 beabstandet, dass ein in den ringförmigen Zwischenraum 31, 32 mündender Gas- bzw. Luftumfenkungsbereich 33, 34 ausgebildet ist.

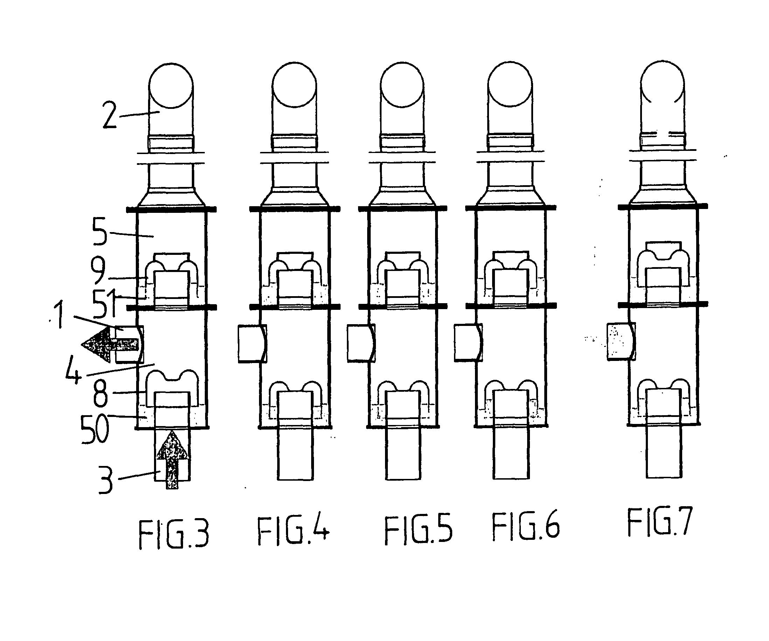

Die Funktionsweise der erfindungsgemäßen Über-/Unterdrucksicherungsvorrichtung wird anhand der Fig. 3 bis Fig.7 gezeigt.

Bei Verwendung ist die erfindungsgemäße Über-/Unterdrucksicherungsvorrichtung mit einer Dichtflüssigkeit, z.B. Wasser oder Glykol teilweise gefüllt. Zu diesem Zweck ist in die erste und in die zweite Betätigungs-Kammer 4, 5 in dem Ringraum zwischen Rohrstutzen 27, 28 und dem Außenmantel der Betätigungs-Kammer 4, 5 bis zu einem bestimmten Füllstand Dichtflüssigkeit eingefüllt, wobei der Druckdeckel 8, 9 jeweils mit seinem Randbereich eintaucht aber nicht bis zum Boden der Betätigungs-Kammer 4, 5 reicht, wodurch eine Flüssigkeitsverbindung zwischen Innen- und Außenbereich der Druckdeckel 8, 9 bestehen bleibt, welche wie zwei kommunizierende Gefäße miteinander verbunden sind.

Auf diese Weise wird der Außenbereich des jeweiligen Druckdeckels 8, 9 gegenüber seinem Innenbereich abgedichtet, wobei im drucklosen Zustand (Fig.5) Niveaugleichheit zwischen dem Dichtflüssigkeitspegel außerhalb und innerhalb herrscht. Es besteht sowohl außen als auch innen gleicher Gasdruck oberhalb der Dichtflüssigkeit. Beide Druckdeckel 8, 9 der Betätigungs-Kammern 4, 5 sind in ihrer Ruhestellung.

Bei Unterdruck im zu sichernden Behälter herrscht im Gasanschluss 1 ein geringerer Druck als im Außenraum außerhalb der erfindungsgemäßen Über-/Unterdrucksicherungsvorrichtung vor. Ein solcher Zustand ist in Fig.4 gezeigt. Im unteren Bereich der kombinierten Über- und Unterdrucksicherungsvorrichtung in der Betätigungs-Kammer 4 wird daher der Flüssigkeitspegel außerhalb des Druckdeckels 8 angehoben und der Flüssigkeitspegel innerhalb des Druckdeckels 8 entsprechend abgesenkt, weil der von außen wirkende Atmosphärendruck auf den innerhalb des Druckdeckels 8 vorhandenen Flüssigkeitspegel drückt.

Wird der Unterdruck größer so wird das innere Flüssigkeitsniveau bis zum unteren Deckelrand bis zur Abrisskante 20 abgesenkt, wodurch Luft aus dem Außenbereich über den Lufteinlass 3 in die Betätigungs-Kammer 4 eintreten kann und der Druckdeckel 8 der Betätigungs-Kammer 4 wird aus seiner Ruhestellung immer mehr angehoben, wodurch ein immer größerer Luftvolumenstrom durch die Verschlussöffnung 6 in die Betätigungs-Kammer 4 und durch den Gasanschluss 1 in den zu sichernden Behälter gelangen kann. Bei vollständig in seine Abblasstellung angehobenem Druckdeckel 8 geht dieser in den Abblasezustand über, der in Fig.3 gezeigt ist. In der darüber angeordneten Betätigungs-Kammer 4 wirkt hingegen der vorherrschende Unterdruck in genau entgegengesetzter Weise, weil der Druckdeckel 9 immer stärker gegen die Verschlussöffnung 7 gesaugt wird und zugleich der Flüssigkeitspegel innerhalb des Druckdeckels 9 angehoben wird.

Im Überdruckfall ist im zu sichernden Behälter und im Gasanschluss 1 Überdruck (Fig.6), sodass der Druckdeckel 8 in der Betätigungs-Kammer 4 nach unten gegen die Verschlussöffnung 6 gepresst wird und der Flüssigkeitspegel außerhalb des Druckdeckels 8 nach unten gedrückt wird, wodurch der innere Flüssigkeitspegel des Druckdeckels 8 entsprechend angehoben wird. In der darüber liegenden Betätigungs-Kammer 5 wirkt sich der Überdruck so aus, dass der Flüssigkeitspegel innerhalb des Druckdeckels 9 abgesenkt und damit der Flüssigkeitspegel außerhalb des Druckdeckels 9 emporgedrückt wird. Dies geschieht so lange, bis sich durch den steigenden Druck der Druckdeckel 9 in Abhängigkeit vom vorhandenen Gewicht in der Gewichtsbelastungskammer 15 zu heben beginnt und der Druckdeckel 19 bei weiterem Druckanstieg voll in seine Abblasstellung angehoben wird und in den Abblasebetrieb übergeht, wie er in Fig. 7 gezeigt ist, wobei der volle Gasvolumenstrom über den Gasauslass 2 ins Freie abgegeben wird.

Bei Absinken des Druckes geht der Druckdeckel 9 wieder in seine Ruhestellung zurück und taucht wieder in die Dichtflüssigkeit ein.

Die erfindungsgemäße Vorrichtung ist weiters von einer nicht dargestellten Wärmeisolierung umgeben und es ist eine nicht dargestellte Heizvorrichtung vorgesehen, die beide dem Zweck dienen, ein Einfrieren der Dichtflüssigkeit bei extrem tiefen Temperaturen zu vermeiden.

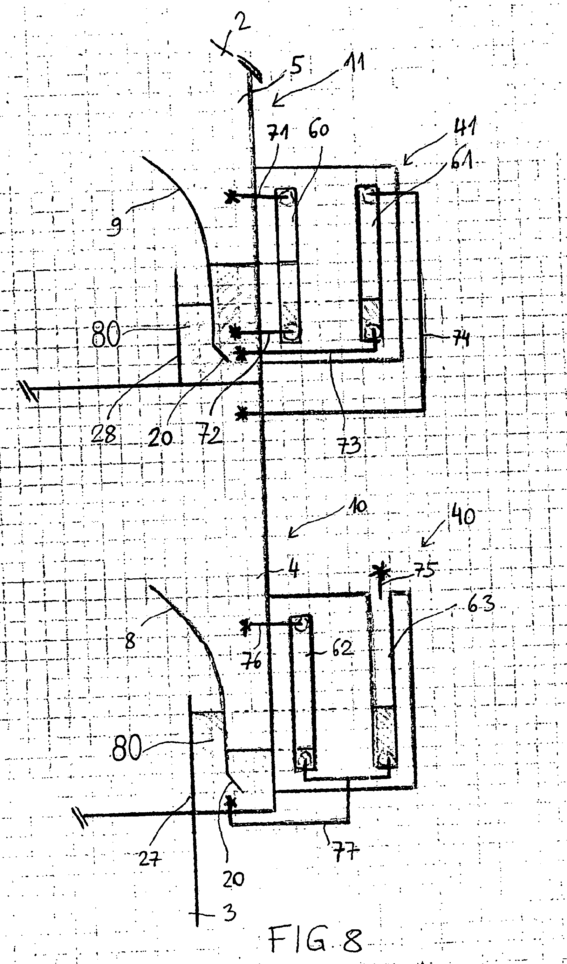

Fig.8 zeigt eine weitere Erfindung, die darin besteht, dass außerhalb der Druckbetätigungsvorrichtung 10, 11 eine Anzeigevorrichtung 40, 41 zur Anzeige des Flüssigkeitsstandes der Dichtflüssigkeit sowohl innerhalb als auch außerhalb des Druckdeckels 8, 9 vorgesehen ist. Dargestellt ist die Anzeigevorrichtung 40, 41 in Fig.8 für den Überdruck-Fall im Gaseinlass 1 (in Fig.8 nicht eingezeichnet).

Fig.8 zeigt weiters eine Ausführungsform der erfindungsgemäß vorgesehenen Strömungs-Abrisskante, die durch eine lineare Aufweitung des Druckdeckels 8, 9 nach außen gebildet ist.

Die Anzeigevorrichtung 40, 41 ist dabei in Form von zwei nebeneinander angeordneten, linearen Pegelanzeigeinstrumenten 60, 61 bzw. 62, 63 gebildet, die parallel verlaufende Skalenbereiche aufweisen. In der Praxis können diese Pegelanzeigeinstrumente mit geringem Aufwand direkt an der Außenwand der erfindungsgemäßen Über-/Unterdrucksicherungsvorrichtung angebracht und über entsprechende Leitungsdurchführungen mit deren Innenraum verbunden sein.

Wie in Fig. 8 gezeigt sind die linearen Pegelanzeigeinstrumente 62, 63 der Druckbetätigungsvorrichtung 10 für die Sicherung gegen Unterdruck durch zwei parallel angeordnete, durchsichtige Röhrchen in vertikaler Ausrichtung gebildet, die an ihren unteren Enden über eine flüssigkeitsdichte Leitung 77 mit dem Bereich innerhalb der Betätigungs-Kammer 4 verbunden sind, in dem die Dichtflüssigkeit 80 aufgenommen ist. Auf diese Weise gelangt Dichtflüssigkeit über die flüssigkeitsdichte Leitung 77 in die Pegelanzeigeinstrumente 62, 63.

Das Pegelanzeigeinstrument 62 ist an seinem oberen Ende mit dem Raum im Inneren der Betätigungs-Kammer 4 oberhalb der Dichtflüssigkeit und außerhalb des Druckdeckels 8 über die gasdichte Leitung 76 verbunden, während das parallele Pegelinstrument 63 an seiner Oberseite direkt mit der umgebenden Atmosphäre verbunden ist, da im Raum oberhalb der Dichtflüssigkeit 80, die sich innerhalb des Druckdeckels 8 befindet, durch die Verbindung mit dem Rohrstutzen 27 und den Lufteinlass 3 Atmosphärendruck herrscht. Dementsprechend stellt sich im Pegelinstrument 62 der Flüssigkeitsstand außerhalb des Druckdeckels 8 und im Pegelinstrument 63 innerhalb des Druckdeckels 8 ein.

In der darüberliegenden Druckbetätigungsvorrichtung 11 für die Sicherung gegen Überdruck sind die linearen Pegelanzeigeinstrumente 60, 61 ebenfalls durch zwei parallel angeordnete, durchsichtige Röhrchen in vertikaler Ausrichtung gebildet, die an ihren unteren Enden jeweils durch flüssigkeitsdichte Leitungen 72, 73 mit dem Bereich der Betätigungs-Kammer 5 verbunden sind, in dem die Dichtflüssigkeit 80 aufgenommen ist. Das linker Hand angeordnete Pegelanzeigeinstrument 60 ist an seinem oberen Ende mit einer gasdichten Leitung 71 mit dem Raum im Inneren der Betätigungs-Kammer 5 oberhalb der Dichtflüssigkeit 80 und außerhalb des Druckdeckels 9 verbunden, könnte aber auch direkt mit der umgebenden Atmosphäre in Verbindung stehen, da über den Abblaseauslass 2 im Gleichgewichtsfall an dieser Stelle Atmosphärendruck herrscht. Das rechter Hand angeordnete Pegelanzeigeinstrument 61 ist an seinem oberen Ende über die gasdichte Leitung 74 mit dem Innenraum der Betätigungskammer 4 verbunden.

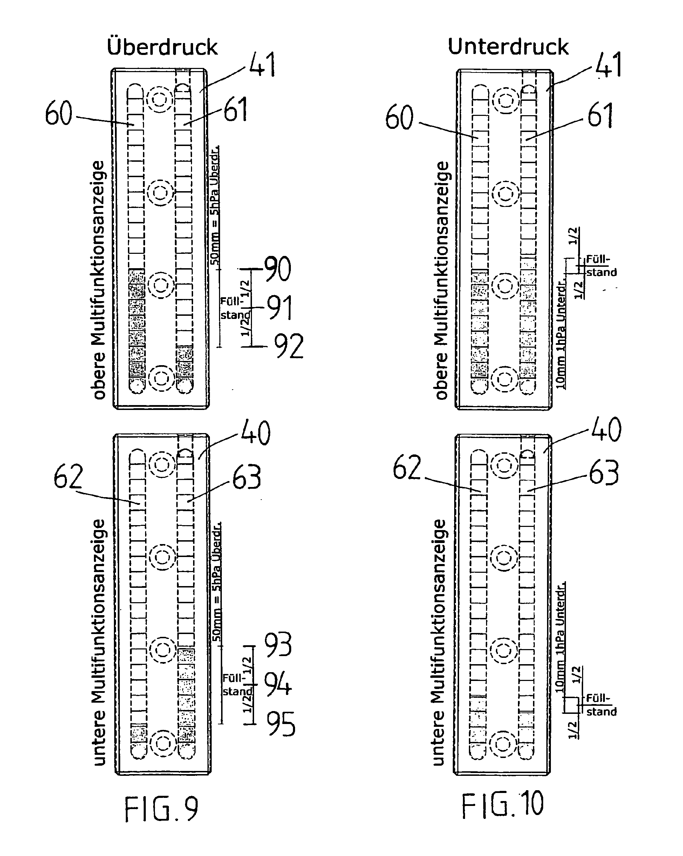

In Fig.9 und 10 sind die Pegelanzeigeinstrumente 60, 61 und 62, 63 eines weiteren Ausführungsbeispiels in Draufsicht für den Fall des Überdruckes und des Unterdruckes gezeigt.

Fig.9 entspricht dem in Fig.8 dargestellten Unterdruckfall. Der Flüssigkeitspegel 90 in der Skala des Pegelanzeigeinstruments 60 stellt das Niveau der Dichtflüssigkeit in der Betätigungs-Kammer 5 außerhalb des Druckdeckels 9 dar, wohingegen der Flüssigkeitspegel 92 dem Niveau der Dichtflüssigkeit innerhalb des Druckdeckels 9 entspricht. Genau in der Mitte zwischen dem Flüssigkeitspegel 90 und dem Flüssigkeitspegel 92 kann der Füllstand 91 der Dichtflüssigkeit bestimmt werden. Sollte dieser Füllstand unter einen bestimmten Wert absinken, muss Dichtflüssigkeit nachgefüllt werden.

Entsprechend umgekehrt verhalten sich die Flüssigkeitspegel 93, 95 der Pegelanzeigeinstrumente 63, 62 für die Betätigungs-Kammer 4 in der darunterliegenden Druckbetätigungsvorrichtung 10. Der Füllstand 94 der Dichtflüssigkeit kann wieder durch Mittelung der Flüssigkeitspegel 93, 95 ermittelt werden.

Analog dazu sind die Flüssigkeitspegel in den Pegelanzeigeinstrumenten 60, 61 und 62, 63 für den Unterdruckfall in Fig.10 angegeben.

## Patentansprüche

1. Über-/Unterdrucksicherungsvorrichtung zur Sicherung von Behältern im Niederdruckgasbereich, mit einem Gasanschluss (1), einem Lufteinlass (3) und/oder einem Ausblasauslass (2) und zumindest einer Druckbetätigungsvorrichtung (10, 11), welche bei Unterschreiten eines voreinstellbaren Niedrigdruck-Wertes den Gasanschluss (1) mit dem Lufteinlass (3) verbindet und/oder bei Überschreiten eines voreinstellbaren Hochdruck-Werts den Gasanschluss (1) mit dem Ausblasauslass (2) verbindet, wobei die zumindest eine Druckbetätigungsvorrichtung (10, 11) eine Betätigungs-Kammer (4, 5) mit einer Verschlussöffnung (6, 7) und einem Druckdeckel (8, 9) umfasst, wobei der Druckdeckel (8, 9) durch Druckeinwirkung zwischen einer Ruhestellung, in welcher der Druckdeckel (8, 9) die Verschlussöffnung (6, 7) zumindest teilweise verschließt, und einer Abblasstellung, in welcher der Druckdeckel (8, 9) von der Verschlussöffnung (6, 7) abgehoben ist und diese freigibt, bewegbar ist, und wobei die Betätigungs-Kammer (4, 5) mit einer Dichtflüssigkeit teilweise befüllbar ist, in welche der Druckdeckel (8, 9) - bei Verwendung - in der Ruhestellung zumindest bereichsweise eintaucht, **dadurch gekennzeichnet, dass** der Druckdeckel (8, 9) glockenförmig ausgebildet ist und - in Gebrauchsposition - an seiner Unterseite eine Glockenöffnung (21, 22) aufweist, deren Rand nach außen gekrümmt ist, um eine Strömungs-Abrisskante (20) auszubilden.

2. Über-/Unterdrucksicherungsvorrichtung zur Sicherung von Behältern im Niederdruckgasbereich,mK einem Gasanschluss (1), einem Lufteinlass (3) und/oder einem Ausblasauslass (2) und zumindest einer Druckbetätigungsvorrichtung (10, 11), welche bei Unterschreiten eines voreinstellbaren Niedrigdruck-Wertes den Gasanschluss (1) mit dem Lufteinlass (3) verbindet und/oder bei Überschreiten eines voreinstellbaren Hochdruck-Werts den Gasanschluss (1) mit dem Ausbiasauslass (2) verbindet, wobei die zumindest eine Druckbetätigungsvorrichtung (10, 11) eine Betätigungs-Kammer (4, 5) mit einer Verschlussöffnung (6, 7) und einem Druckdeckel (8, 9) umfasst, wobei der Druckdeckel (8, 9) durch Druckeinwirkung zwischen einer Ruhestellung, in welcher der Druckdeckel (8, 9) die Verschlussciffnung (6, 7) zumindest teilweise verschließt, und einer Abblasstellung, in welcher der Druckdeckel (8, 9) von der Verschlussöffnung (6, 7) abgehoben ist und diese freigibt, bewegbar ist, und wobei die Betätigungs-Kammer (4, 5) mit einer Dichtflüssigkeit teilweise befüllbar ist, in welche der Druckdeckel (8, 9) - bei Verwendung - in der Ruhestellung zumindest bereichsweise eintaucht, **dadurch gekennzeichnet, dass** der Druckdeckel (8, 9) an seiner Oberseite eine torus-artige Auswölbung aufweist, um an der Innenseite einen Strömungsumlenkbereich auszubilden, der - im Querschnitt gesehen - im Wesentlichen einen kreissegmentförmigen Radial-Verlauf aufweist.

3. Vorrichtung nach Anspruch 1 oder 2, **dadurch gekennzeichnet, dass** der Druckdeckel (8,9) rotationssymmetrisch ausgebildet ist und entlang seiner Symmetrieachse ein Führungsstab (16, 17) vorgesehen ist, der so gelagert ist, dass er die Bewegung des Druckdeckels (8,9) zwischen der Ruhestellung und der Abblasstellung entlang der Symmetrieachse ermöglicht.

4. Vorrichtung nach Anspruch 3, **dadurch gekennzeichnet, dass** eine Positionsdetektionsvorrichtung vorgesehen ist, welche die Position des Führungsstabes (16, 17) detektiert.

5. Vorrichtung nach einem der Ansprüche 1 bis 4, **dadurch gekennzeichnet, dass** eine Druckmessvorrichtung vorgesehen ist, welche den Druck im Ausblasauslass (2) und/oder im Lufteinlass (3) misst.

6. Vorrichtung nach einem der vorhergehenden Ansprüche, **dadurch gekennzeichnet, dass** der Druckdeckel (9) an seiner Oberseite eine Gewichtsbelastungs-Kammer (15) aufweist, die zur Einstellung des Ansprechdruckes mit Gewichtseinheiten wahlweise befüllbar ist.

7. Vorrichtung nach einem der Ansprüche 1 bis 6, **dadurch gekennzeichnet, dass** der glockenförmige Druckdeckel (8, 9) an seiner Oberseite eine mittige, vertieft angeordnete Fläche (23, 24) aufweist, die parallel zur Glockenöffnung (21, 22) orientiert ist und weiche in der Ruhestellung des Druckdeckels (8,9) die Verschlussöffnung (6, 7) teilweise abdeckt.

8. Vorrichtung nach einem der Ansprüche 1 bis 7, **dadurch gekennzeichnet, dass** der glockenförmige Druckdeckel (8, 9) einen hohlzylindrischen Abschnitt aufweist.

9. Vorrichtung nach einem der vorhergehenden Ansprüche, **dadurch gekennzeichnet, dass** die Verschlussöffnung (6, 7) am freien Ende eines Rohrstutzens (27, 28) ausgebildet ist, dessen Außendurchmesser kleiner als die Innenweite des glockenförmigen Druckdeckels (8, 9) ist, und der in die Betätigungs-Kammer (4, 5) und in den dort angeordneten glockenförmigen Druckdeckel (8, 9) ragt, sodass zwischen Rohrstutzen (27, 28) und Druckdeckel (8, 9) ein ringförmiger Zwischenraum (31, 32) definiert ist, in den die bei Verwendung in der Betätigungs-Kammer (4, 5) eingefüllte Dichtflüssigkeit eintreten kann.

10. Vorrichtung nach Anspruch 2 und 9, **dadurch gekennzeichnet, dass** der glockenförmige Druckdeckel (8, 9) im Bereich des freien Ende des Rohrstutzens (27, 28) durch die torus-artige Auswölbung so gekrümmt und so vom Rohrstutzen (27, 28) beabstandet ist, dass ein in den ringförmigen Zwischenraum (31, 32) mündender Gas- bzw. Luftumlenkungsbereich (33, 34) ausgebildet ist.

11. Vorrichtung nach einem der vorhergehenden Ansprüche, **dadurch gekennzeichnet, dass** die zumindest eine Druckbetätigungsvorrichtung durch eine erste Druckbetätigungsvorrichtung (10) zur Sicherung gegen Unterdruck und eine zweite Druckbetätigungsvorrichtung (11) zur Sicherung gegen Überdruck gebildet ist.

12. Vorrichtung nach Anspruch 11, **dadurch gekennzeichnet, dass** die Betätigungs-Kammer (4) der ersten Druckbetätigungsvorrichtung (10) - in Gebrauchsstellung - unterhalb der zweiten Druckbetätigungsvorrichtung (11) angeordnet ist.

13. Vorrichtung nach Anspruch 12, **dadurch gekennzeichnet, dass** der Rohrstutzen (28) der zweiten Druckbetätigungsvorrichtung (11) mit der ersten Druckbetätigungsvordchtung (10) in Verbindung steht, und der Ausblasauslass (2) mit der zweiten Druckbetätigungsvorrichtung (11) verbunden ist.

14. Vorrichtung nach Anspruch 12 oder 13, **dadurch gekennzeichnet, dass** der Lufteinlass (3) mit dem Rohrstutzen (27) der ersten Druckbetätigungsvorrichtung (10) verbunden ist, und dass der Gasanschluss (1) mit der ersten Druckbetätigungsvorrichtung (10) verbunden ist.

15. Vorrichtung nach einem der Ansprüche 11 bis 14, **dadurch gekennzeichnet, dass** die Betätigungs-Kammer (4, 5) der ersten und der zweiten Druckbetätigungsvorrichtung (10, 11) jeweils hohlzylindrisch ausgebildet ist und Verbindungsflansche an beiden Enden der Betätigungskammern (4, 5) vorgesehen sind.

16. Vorrichtung nach einem der vorhergehenden Ansprüche, **dadurch gekennzeichnet, dass** sie von einer Wärmeisolierung umgeben ist.

17. Vorrichtung nach einem der vorhergehenden Ansprüche, **dadurch gekennzeichnet, dass** eine Heizvorrichtung vorgesehen ist.

18. Vorrichtung nach einem der vorhergehenden Ansprüche, **dadurch gekennzeichnet, dass** außerhalb der zumindest einen Druckbetätigungsvorrichtung (10, 11) eine Anzeigevorrichtung (40, 41) zur Anzeige des Flüssigkeitsstandes der Dichtflüssigkeit sowohl innerhalb als auch außerhalb des Druckdeckels (8, 9) vorgesehen ist.

19. Vorrichtung nach Anspruch 18, **dadurch gekennzeichnet, dass** die Anzeigevorrichtung (40, 41) in Form von zwei nebeneinander angeordneten, linearen Pegelanzeigeinstrumenten (60, 61; 62, 63) gebildet ist, die parallel verlaufende Skalenbereiche aufweisen.

20. Vorrichtung nach Anspruch 19, **dadurch gekennzeichnet, dass** die linearen Pegelanzeigeinstrumente (60, 61; 62, 63) durch zwei parallel angeordnete, durchsichtige Röhrchen gebildet sind, die an ihren Enden über flüssigkeitsdichte und/oder gasdichte Leitungen (71, 72, 73, 74; 75, 76, 77) mit dem Bereich innerhalb des Druckdeckels (8,9), außerhalb des Druckdeckels (8,9) oder mit der Atmosphäre verbunden sind.

## Claims

1. An excess/negative pressure protection device for protecting containers against low-pressure gases, said device comprising a gas supply (1), an air inlet (3), and/or an exhaust outlet (2) and at least one pressure control device (10, 11) which, in case the pressure falls below a predeterminable low-pressure value, connects the gas supply (1) to the air inlet (3), and/or, in case the pressure exceeds a predeterminable high-pressure value, connects the gas supply (1) to the exhaust outlet (2), said at least one pressure control device (10, 11) comprising a control chamber (4, 5) having a sealable opening (6, 7) and a pressure cover (8, 9), said pressure cover (8, 9) being movable under the influence of pressure between a resting position, in which said pressure cover (8, 9) at least partially covers said sealable opening (6, 7), and an exhaust position, in which said pressure cover (8, 9) is lifted from the sealable opening (6, 7) and exposing it, and the control chamber (4, 5) being partially fillable with a sealing liquid, into which, during use, said pressure cover (8, 9) is at least partially immersed in its resting position, **characterized in that** the pressure cover (8, 9) is bell-shaped and - in its operating position - has a bell opening (21, 22) in its bottom, the edge of said bell opening being curved outwards in order to form a flow separation edge (20).

2. The excess/negative pressure protection device for protecting containers against low-pressure gases, said device comprising a gas supply (1), an air inlet (3), and/or an exhaust outlet (2) and at least one pressure control device (10, 11) which, in case the pressure falls below a predeterminable low-pressure value, connects the gas supply (1) to the air inlet (3), and/or, in case the pressure exceeds a predeterminable high-pressure value, connects the gas supply (1) to the exhaust outlet (2), said at least one pressure control device (10, 11) comprising a control chamber (4, 5) having a sealable opening (6, 7) and a pressure cover (8, 9), said pressure cover (8, 9) being movable under the influence of pressure between a resting position, in which said pressure cover (8, 9) at least partially covers said sealable opening (6, 7), and an exhaust position, in which said pressure cover (8, 9) is lifted from the sealable opening (6, 7) and exposing it, and the control chamber (4, 5) being partially fillable with a sealing liquid, into which, during use, said pressure cover (8, 9) is at least partially immersed in its resting position, **characterized in that** the pressure cover (8, 9) has a torus-like bulging in its upper surface in order to form a flow deflection area on its interior side, said flow deflection area, as seen in cross-section, having a radial shape which essentially corresponds to that of a circle segment.

3. The device according to claim 1 or claim 2, **characterized in that** the pressure cover (8, 9) is rotationally symmetrical and a guiding rod (16, 17), which is positioned in order to allow for the pressure cover (8, 9) to be moved along the axis of symmetry between its resting position and its exhaust position, is provided along the pressure cover's axis of symmetry.

4. The device according to claim 3, **characterized in that** a position detecting device is provided for detecting the guiding rod's (16, 17) position.

5. The device according to any one of the claims 1 to 4, **characterized in that** a pressure measuring device which measures the pressure in the exhaust outlet (2) and/or in the air inlet (3) is provided.

6. The device according to any one of the preceding claims, **characterized in that** the pressure cover (9) has a weight load chamber (15) which is optionally fillable with weight units in order to adjust the opening pressure.

7. The device according to any one of the claims 1 to 6, **characterized in that**, on its upper surface, the bell-shaped pressure cover (8, 9) has a central, recessed face (23, 24) which is oriented parallel to the bell opening (21, 22) and which partially covers the sealable opening (6, 7), when the pressure cover (8, 9) is in its resting position.

8. The device according to any one of the claims 1 to 7, **characterized in that** the bell-shaped pressure cover (8, 9) has a hollow cylindrical section.

9. The device according to any one of the preceding claims, **characterized in that** the sealable opening (6, 7) is formed at the free end of a pipe socket (27, 28), the outer diameter of said pipe socket being smaller than the inner width of the bell-shaped pressure cover (8, 9), said pipe socket extending into the control chamber (4, 5) and into the bell-shaped pressure cover (8, 9) positioned therein, so that an annular space (31, 32), into which the sealing liquid filled into the control chamber (4, 5) during use may enter, is defined between the pipe socket (27, 28) and the pressure cover (8, 9).

10. The device according to claim 2 and claim 9, **characterized in that**, in the area of the free end of the pipe socket (27, 28), the bell-shaped pressure cover (8, 9) is curved and spaced apart from the pipe socket (27, 28) by means of the torus-like bulge, so that a gas or air deviation area (33, 34) leading into the annular space (31, 32) is formed.

11. The device according to any one of the preceding claims, **characterized in that** said at least one pressure control device is formed by a first pressure control device (10) for providing protection against negative pressure and a second pressure control device (11) for providing protection against excess pressure.

12. The device according to claim 11, **characterized in that**, during use, the control chamber (4) of the first pressure control device (10) is positioned below the second pressure control device (11).

13. The device according to claim 12, **characterized in that** the pipe socket (28) of the second pressure control device (11) is connected to the first pressure control device (10) and **in that** the exhaust outlet (2) is connected to the second pressure control device (11).

14. The device according to claim 12 or claim 13, **characterized in that** the air inlet (3) is connected to the pipe socket (27) of the first pressure control device and **in that** the gas supply (1) is connected to the first pressure control device (10).

15. The device according to any one of the claims 11 to 14, **characterized in that** the control chambers (4, 5) of the first and the second pressure control devices (10, 11) each have a hollow cylindrical shape and **in that** connecting flanges are provided at both ends of the control chambers (4, 5).

16. The device according to any one of the preceding claims, **characterized in that** it is surrounded by a thermal insulation material.

17. The device according to any one of the preceding claims, **characterized in that** a heating device is provided.

18. The device according to any one of the preceding claims, **characterized in that** outside said at least one pressure control device (10, 11) a display device (40, 41) for displaying the liquid level of the sealing liquid both inside and outside the pressure cover (8, 9) is provided.

19. The device according to claim 18, **characterized in that** the display device (40, 41) is formed by two adjacent linear liquid level display instruments (60, 61; 62, 63) having parallel scale ranges.

20. The device according to claim 19, **characterized in that** the linear liquid level display instruments (60, 61; 62, 63) are formed by two parallel, transparent tubes which, at both ends, are connected to the area within the pressure cover (8, 9), the area outside the pressure cover (8, 9), or the atmosphere by means of liquid-tight and/or gas-tight conduits (71, 72, 73, 74; 75, 76, 77).

## Revendications

1. Dispositif de protection contre la pression excessive/négative pour la protection de récipients utilisés avec la gaz à basse pression, ledit dispositif comprenant un raccordement au gaz (1), une entrée d'air (3) et/ou une sortie de vidange (2) et au moins un dispositif de commande de pression (10, 11) qui, quand la pression dépasse une limite inférieure prédétérminable de basse pression, relie le raccordement au gaz (1) avec l'entrée d'air (3), et/ou, quand la pression dépasse la limite supérieure prédétérminable de haute pression, relie le raccordement au gaz (1) avec la sortie de vidange (2), ledit au moins un dispositif de commande de pression (10, 11) comprenant une chambre de commande (4, 5) avec un orifice fermant (6, 7) et un couvercle de pression (8, 9), ledit couvercle de pression (8, 9) étant susceptible d'être déplacé entre une position de repos, dans laquelle ledit couvercle de pression (8, 9) couvre au moins un part de l'orifice fermant (6, 7), et une position de vidange, dans laquelle ledit couvercle de pression (8, 9) est levé de l'orifice fermant (6, 7) exposant ceci, et la chambre de commande (4, 5) étant susceptible d'être remplie partiellement d'un liquide d'étanchéité, dans lequel le couvercle de pression (8, 9), pendant son utilisation, est au moins partiellement immergé dans sa position de repos, **caractérisé en ce que** le couvercle de pression (8, 9) est en forme de cloche et - dans sa position d'utilisation - a un orifice de cloche (21, 22) dans sa face inférieure, le bord dudit orifice de cloche (21, 22) étant arqué vers l'extérieur pour former une arête de séparation de courant (20).

2. Dispositif de protection contre la pression excessive/négative pour la protection de récipients utilisés avec des gaz à basse pression, ledit dispositif comprenant un raccordement au gaz (1), une entrée d'air (3) et/ou une sortie de vidange (2) et au moins un dispositif de commande de pression (10, 11) qui, quand la pression dépasse une limite inférieure prédétérminable de basse pression, relie le raccordement au gaz (1) avec l'entrée d'air (3), et/ou, quand la pression dépasse la limite supérieure prédétérminable de haute pression, relie le raccordement au gaz (1) avec la sortie de vidange (2), ledit au moins un dispositif de commande de pression (10, 11) comprenant une chambre de commande (4, 5) avec un orifice fermant (6, 7) et un couvercle de pression (8, 9), ledit couvercle de pression (8, 9) étant susceptible d'être déplacé entre une position de repos, dans laquelle ledit couvercle de pression (8, 9) couvre au moins un part de l'orifice fermant (6, 7), et une position de vidange, dans laquelle ledit couvercle de pression (8, 9) est levé de l'orifice fermant (6, 7) exposant ceci, et la chambre de commande (4, 5) étant susceptible d'être remplie partiellement d'un liquide d'étanchéité, dans lequel le couvercle de pression (8, 9), pendant son utilisation, est au moins partiellement immergé dans sa position de repos, **caractérisé en ce que** le couvercle de pression (8, 9) a une courbure de type tore à sa surface supérieure pour former un domaine de déviation de courant qui, vu en coupe transversale, essentiellement a une allure radiale en forme de segment de cercle.

3. Dispositif selon la revendication 1 ou 2, **caractérisé en ce que** le couvercle de pression (8, 9) a une forme à symétrie de révolution et **en ce qu'**une barre de guidage (15, 17) est prévue le long de son axe de symétrie, ladite barre étant positionnée pour permettre le déplacement du couvercle de pression (8, 9) entre la position de repos et la position de vidange le long de l'axe de symétrie.

4. Dispositif selon la revendication 3, **caractérisé en ce qu'**un dispositif de détection de position est prévu pour détecter la position de la barre de guidage (16, 17).

5. Dispositif selon l'une des revendications 1 à 4, **caractérisé en ce qu'**un dispositif indicateur de pression est prévu pour mesurer la pression dans la sortie de vidange (2) et/ou dans l'entrée d'air (3).

6. Dispositif selon l'une des revendications précédentes, **caractérisé en ce que** le couvercle de pression (9) a une chambre de charge pondérale (15) à sa surface supérieure, ladite chambre étant remplissable d'unités pondérales pour ajuster la pression de réponse.

7. Dispositif selon l'une des revendications 1 à 6, **caractérisé en ce que** le couvercle de pression (8, 9) en forme de cloche a une face centrale en retrait (23, 24) dans sa surface supérieure, ladite face étant orientée pour être parallèle à l'orifice de la cloche (21, 22) et couvrant une partie de l'orifice fermant (6, 7) quand le couvercle de pression (8, 9) est dans sa position de repos.

8. Dispositif selon l'une des revendications 1 à 7, **caractérisé en ce que** le couvercle de pression (8, 9) en forme de cloche a une section en forme de cylindre creux.

9. Dispositif selon l'une des revendications précédentes, **caractérisé en ce que** l'orifice fermant (6, 7) est formé au bout libre d'une tubulure (27, 28), le diamètre extérieur de ladite tubulure étant plus petit que le diamètre intérieur du couvercle de pression (8, 9) en forme de cloche, ladite tubulure s'étendant dans la chambre de commande (4, 5) et le couvercle de pression (8, 9) qui y est positionné, ainsi qu'un espace annulaire (31, 32) est défini entre la tubulure (27, 28) et le couvercle de pression (8, 9), dans lequel le liquide d'étanchéité, versé dans la chambre de commande (4, 5) pendant l'utilisation du dispositif, peut entrer.

10. Dispositif selon l'une des revendications 2 et 9, **caractérisé en ce que**, dans le domaine du bout libre de la tubulure (27, 28), le couvercle de pression (8, 9) en forme de cloche est courbé par la courbure en forme de tore et écarté de la tubulure (27, 28) de manière qu'un domaine de déviation de gaz ou d'air (33, 34) aboutissant à l'espace annulaire (31, 32) soit formé.

11. Dispositif selon l'une des revendications précédentes, **caractérisé en ce que** ledit au moins un dispositif de commande de pression se constitue d'un premier dispositif de commande de pression (10) pour la protection contre une pression négative et un deuxième dispositif de commande de pression (11) pour la protection contre une pression excessive.

12. Dispositif selon la revendication 11, **caractérisé en ce que**, dans sa position d'utilisation, la chambre de commande (4) du premier dispositif de commande de pression (10) est située sous le deuxième dispositif de commande de pression (11).

13. Dispositif selon la revendication 12, **caractérisé en ce que** la tubulure (28) du deuxième dispositif de commande de pression (11) est reliée au premier dispositif de commande de pression (10) et **en ce que** la sortie de vidange (2) est reliée au deuxième dispositif de commande de pression (11).

14. Dispositif selon la revendication 12 ou 13, **caractérisé en ce que** l'entrée d'air (3) est reliée à la tubulure (27) du premier dispositif de commande de pression (10) et **en ce que** le raccordement au gaz (1) est relié au premier dispositif de commande de pression (10).

15. Dispositif selon l'une des revendications 11 à 14, **caractérisé en ce que** chacune des chambres de commande (4, 5) du premier et du deuxième dispositif de commande de pression (10, 11) a la forme d'un cylindre creux et **en ce que** des brides d'assemblage sont prévues aux deux bouts des chambres de commande (4, 5).

16. Dispositif selon l'une des revendications précédentes, **caractérisé en ce qu'**il est revêtu d'une enveloppe isolante.

17. Dispositif selon l'une des revendications précédentes, **caractérisé en ce qu'**un dispositif de chauffage est prévu.

18. Dispositif selon l'une des revendications précédentes, **caractérisé en ce qu'**un dispositif indicateur (40, 41) est prévu à l'extérieur dudit au moins un dispositif de commande de pression (10, 11) pour indiquer le niveau du liquide d'étanchéité à l'intérieur et à l'extérieur du couvercle de pression (8, 9).

19. Dispositif selon la revendication 18, **caractérisé en ce que** le dispositif indicateur (40, 41) est constitué par deux indicateurs de niveau linéaires (40, 41), positionnés à côté l'un de l'autre, ayant des gammes parallèles.

20. Dispositif selon la revendication 19, **caractérisé en ce que** deux indicateurs de niveau linéaires (60, 61; 62, 63) sont constitués par deux tubes transparents parallèles, les bouts desquels sont reliés à un domaine à l'intérieur du couvercle de pression (8, 9), à l'extérieur du couvercle de pression (8, 9) ou à l'atmosphère à l'aide de conduits étanches au gaz et au liquide (71, 72, 73, 74; 75, 76, 77).
